# DEMANDE DE BREVET EUROPEEN

(11) **EP 3 048 066 A1**
(43) Date de publication de la demande: **27.07.2016**
(21) Numéro de dépôt: 16156006.5
(22) Date de dépôt: 13.04.2009
(51) Int. Cl.: B65D 85/804

(54) **CAPSULE POUR LA PREPARATION D'UNE BOISSON**

(30) Priorité: 14.04.2008 WO PCT/IB2008/051412
(62) Demande divisionnaire de: 09733266.2
(71) Demandeur: Ethical Coffee Company SA, 1700 Fribourg (CH)
(72) Inventeur: Mariller, Alain, 1801 Le Mont Pèlerin (CH)
(74) Mandataire: August & Debouzy avocats

(57) **Abrégé**

Capsule (1) pour la préparation d'une boisson, par exemple du café, comprenant un élément creux destiné à contenir une dose, p.ex. de café moulu, ledit élément creux comprenant une paroi latérale (2), une face supérieure, une face inférieure comportant une membrane d'extraction et un rebord (3) en forme de collerette, ce dernier étant orienté selon un plan qui coupe ladite paroi latérale (2); capsule (1) caractérisée par le fait que le rebord (3) est constitué d'un matériau qui se ramollit lorsqu'il est mis en contact avec un liquide.

## Description

### Domaine de l'invention

La présente invention se situe dans le domaine de la préparation de boissons, p.ex. à base de café, par extraction d'une dose concentrée, p.ex. de café moulu, contenue dans une capsule. Elle se rapporte plus particulièrement aux doses utilisées à cet effet ainsi qu'aux dispositifs utilisant de telles doses.

### Etat de la technique

Des capsules et des machines fonctionnant selon le principe précité existent depuis de nombreuses décennies.

Les brevets US 2 899 886, US 2 968 560, US 3 403 617 et US 3 607 297 décrivent des dispositifs où la capsule est initialement perforée en plusieurs endroits, puis traversée par de l'eau chaude sous pression.

La capsule décrite dans le brevet CH 605 293 ou dans le brevet EP 0 242 556 B1 comporte une membrane dans sa partie inférieure. De l'eau chaude sous pression est initialement introduite dans la partie supérieure de la capsule, ce qui entraîne un gonflement de la capsule, principalement au niveau de la membrane. A partir d'une certaine pression, la membrane se déchire, autorisant de la sorte l'écoulement d'un mélange eau-café.

D'autres capsules munies d'une membrane sont décrites dans les documents brevets suivants : EP 0 468 079 A, EP 0 806 373 A, EP 0 554 469 A.

Si la plus grande partie d'eau chaude introduite sous pression pénètre et traverse la capsule, une autre partie s'écoule à l'extérieur de celle-ci, le long de la face externe de la paroi latérale. En principe, ces fuites ne devraient pas s'écouler au-delà de la base de la paroi latérale car à cet endroit, la cage de capsule est en contact avec le rebord.
Cela n'est malheureusement pas le cas avec les capsules de l'état de la technique. Du liquide peut donc s'écouler à l'extérieur de la machine et/ou se mélanger avec le liquide ayant traversé l'intérieur de la capsule. Dans ce dernier cas de figure, la qualité du café est diminuée.

Il existe donc un besoin de réduire, voire éliminer, les fuites de liquide qui s'écoule sur le long de la face externe de la paroi latérale de la capsule.

### Exposé général de l'invention

Un des objectifs de la présente invention réside dans une amélioration des capsules de l'état de la technique.

Un autre objectif consiste à remédier au problème d'étanchéité exposé dans le chapitre précédent.

Plus particulièrement, l'invention vise notamment à éviter que du liquide, qui normalement doit s'écouler uniquement dans et au-travers de la capsule, s'écoule à l'extérieur de celle-ci, le long de la paroi latérale externe de la capsule, au-delà de la zone de contacte entre le rebord et la cage de capsule.

Cet objectif, en particulier, est réalisé avec la capsule selon l'invention telle que définie dans la revendication principale et des modes d'exécution particuliers sont définis dans les revendications dépendantes.

L'invention a pour avantage d'améliorer l'étanchéité entre le rebord et la partie inférieure de la cage de capsule. En effet, lorsque que de l'eau s'écoule sur la face externe de la paroi de la capsule et contacte le rebord, ce dernier se ramollit. La cage de capsule peut ainsi s'enfoncer plus profondément dans l'épaisseur du rebord. L'étanchéité à cet endroit est donc améliorée.

Tout matériau qui se comporte comme indiqué précédemment, c'est-à-dire qui se ramollit peut être utilisé dans le cadre de la présente invention.

Avantageusement il s'agit d'un matériau biodégradable.

L'invention est décrite plus en détail ci-après au moyen d'exemples illustrés par les figures ci-jointes.

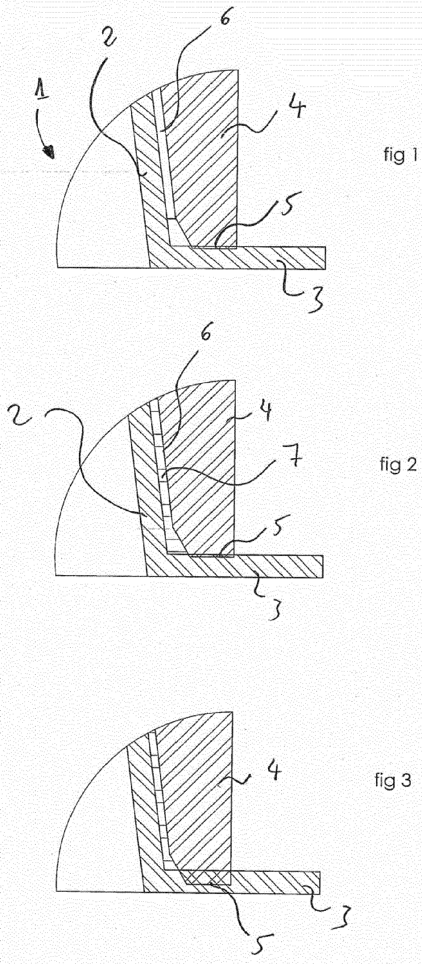

La figure 1 représente une capsule 1 selon l'invention après fermeture de la cage 4, mais préalablement à l'entrée d'eau chaude.
La figure 2 illustre l'entrée d'eau chaude 7, principalement dans la capsule 1, mais également dans l'espace 6 qui se situe entre la face externe de la paroi latérale 2 de la capsule et la face interne de la cage 4.
La figure 3 illustre le positionnement de la cage 4 par rapport au rebord, après ramollissement de ce dernier.

Selon l'invention, la capsule 1 pour la préparation d'une boisson, par exemple du café, comprend un élément creux destiné à contenir une dose, p.ex. de café moulu. L'élément creux comprend une paroi latérale 2, une face supérieure, une face inférieure avec une membrane d'extraction et un rebord 3; ladite paroi latérale 2 se prolongeant dans sa partie inférieure de manière à former ledit rebord 3, ce dernier étant orienté selon un plan qui coupe ladite paroi latérale 2 Selon l'invention, le rebord 3 est formé au moins partiellement d'un matériau qui se ramollit lorsqu'il est mis en contact avec un liquide.

De préférence, la température de ramollissement dudit matériau est supérieure à la température ambiante.

La présente invention n'est pas limitée aux exemples et modes d'exécution décrits à titre purement illustratif. Des variations sont possibles dans le cadre de la protection revendiquée, notamment en faisant appel à des moyens équivalents.

Liste des références numériques utilisées sur les figures :
- 1.: Capsule
- 2.: Paroi latérale
- 3.: Rebord
- 4.: Cage
- 5.: Partie inférieure de cage
- 6.: Espace entre la capsule et la cage
- 7.: Eau

## Revendications

1. Capsule (1) pour la préparation d'une boisson, par exemple du café, comprenant un élément creux destiné à contenir une dose, p.ex. de café moulu, ledit élément creux comprenant une paroi latérale (2), une face supérieure, une face inférieure comportant une membrane d'extraction et un rebord (3) en forme de collerette, ce dernier étant orienté selon un plan qui coupe ladite paroi latérale (2) ; capsule (1) **caractérisée par le fait que** le rebord (3) est constitué d'un matériau qui se ramollit lorsqu'il est mis en contact avec un liquide.

2. Capsule (1) selon la revendication 1 dans laquelle le matériau formant le rebord (3) est adapté pour se ramollir au contact d'un liquide dont la température est supérieure à la température ambiante.

3. Capsule (1) selon l'une des revendications précédentes dans laquelle la paroi latérale (2) et le rebord (3) sont formés à partir d'un même élément, le rebord (3) constituant une extension de la paroi latérale (2).

4. Capsule (1) selon l'une des revendications précédentes dans laquelle le matériau formant le rebord (3) est également adapté pour augmenter son volume lorsqu'il entre en contact avec un liquide.

5. Capsule (1) selon l'une des revendications précédentes dans laquelle ledit matériau est biodégradable.
